# EUROPEAN PATENT SPECIFICATION

(11) **EP 2 337 123 B1**
(45) Date of publication and mention of the grant of the patent: **11.01.2017**
(21) Application number: 10192076.7
(22) Date of filing: 22.11.2010
(51) Int. Cl.: H01M 4/04, H01M 10/052, H01M 4/131, H01M 4/133, H01M 2/02

(54) **Electrode assembly and secondary battery including the same**
Elektrodenanordnung und eine diese enthaltende Sekundärbatterie
Ensemble d'électrode et batterie secondaire en disposant

(30) Priority: 26.11.2009 KR 20090115145
(43) Date of publication of application: 22.06.2011
(73) Proprietor: Samsung SDI Co., Ltd, Gyeonggi-do 17084 (KR)
(72) Inventor: Ahn, Changbum, Gyeonggi-do (KR); Sohn, Youngbae, Gyeonggi-do (KR); Shin, Jeongsoon, Gyeonggi-do (KR)
(74) Representative: Walaski, Jan Filip

(56) References cited:
- CN-Y- 201 191 624
- KR-A- 20080 020 250
- US-A1- 2008 241 705

## Description

The present invention relates to an electrode assembly and a secondary battery including the same.

With the rapid advance of electronic, communication and computer industries recently, the supply of portable electronic equipment is increasing. As the power supply source of the portable electronic equipment, a secondary battery capable of being recharged is mainly being used.

A typical secondary battery includes an electrode assembly that includes a separator interposed between and insulating a positive electrode and a negative electrode.

US 2008/0241705 discloses an electrode assembly for a secondary battery.

According to the present invention, there is provided an electrode assembly according to claim 1 and a method for manufacturing an electrode assembly according to claim 12.

According to an aspect of embodiments of the present invention, in an electrode assembly and a secondary battery including the same, a positive electrode and a negative electrode are easily aligned, thereby reducing or preventing structural instability and/or chemical instability due to an alignment error.

According to one embodiment of the present invention, an electrode assembly includes: a positive electrode including a positive electrode coating portion coated on a surface of a positive electrode collector; a negative electrode including a negative electrode coating portion coated on a surface of a negative electrode collector; and a separator between the positive electrode and the negative electrode for insulating the positive electrode, and the positive electrode and the negative electrode are stacked, the surface of the positive electrode and the surface of the negative electrode are facing each other, and the positive electrode coating portion and the negative electrode coating portion on the surfaces facing each other have a same area, or an area of the positive electrode coating portion is greater than an area of the negative electrode coating portion within a first tolerance range. According to another embodiment of the present invention, a secondary battery includes: an electrode assembly; a pouch accommodating the electrode assembly; and a circuit protection module electrically connected to the electrode assembly, and the electrode assembly includes: a positive electrode including a positive electrode coating portion coated on a surface of a positive electrode collector; a negative electrode including a negative electrode coating portion coated on a surface of a negative electrode collector; and a separator between the positive electrode and the negative electrode for insulating the positive electrode, and the positive electrode and the negative electrode are stacked, the surface of the positive electrode and the surface of the negative electrode are facing each other, and the area of the positive electrode coating portion is greater than an area of the negative electrode coating portion within a first tolerance range.

The first tolerance range may be about 0.3 % of the area of the positive electrode coating portion.

The area of the positive is greater than the area of the negative electrode within a second tolerance range.

The second tolerance range may be about 0.3 % of the area of the positive electrode.
The separator may include a non-woven fabric.

The separator may include a material selected from the group consisting of polyethylene, polypropylene, polyvinylidene fluoride, polyethylene oxide, polyacrylonitrile, and polyvinylidene fluoride hexafluoropropylene.

The negative electrode coating portion includes lithium titanium oxide (LTO). The positive electrode coating portion is coated on the entire area of the surface of the positive electrode collector other than a positive electrode tab, and the negative electrode coating portion is coated on the entire area of the surface of the negative electrode collector other than a negative electrode tab. The positive electrode coating portion may be further coated on another surface of the positive electrode collector that is opposite the surface of the positive electrode collector, and the negative electrode coating portion may be further coated on another surface of the negative electrode collector that is opposite the surface of the negative electrode collector.

The electrode assembly is a stack type electrode assembly. The above and other features and advantages will become more apparent to those of ordinary skill in the art by describing in detail some exemplary embodiments of the present invention with reference to the attached drawings, in which:
FIG. 1 is a perspective view of an electrode assembly according to an exemplary embodiment of the present invention;
FIG. 2 is an exploded view of the electrode assembly of FIG. 1;
FIG. 3 is an exploded view of a portion of the electrode assembly of FIG. 1;
FIG. 4 is a partially disassembled view of a secondary battery according to another exemplary embodiment of the present invention; and
FIG. 5 is a graph showing that swelling does not highly occur in the secondary battery according to embodiments of the present invention.

Some exemplary embodiments will now be described more fully hereinafter with reference to the accompanying drawings; however, embodiments of the present invention may be embodied in different forms and should not be construed as limited to the exemplary embodiments illustrated and set forth herein.

In the drawing figures, the dimensions of layers and regions may be exaggerated for clarity of illustration. It will be understood that when a layer is referred to as being "under" or "over" another layer, it can be directly under or over, respectively, or one or more intervening layers may also be present. In addition, it will also be understood that when a layer is referred to as being "between" two layers, it can be the only layer between the two layers, or one or more intervening layers may also be present. Like reference numerals refer to like elements throughout.

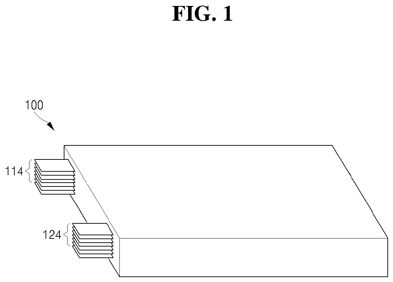

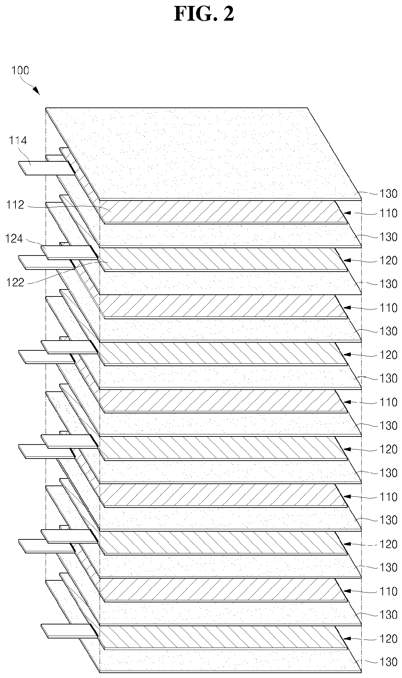

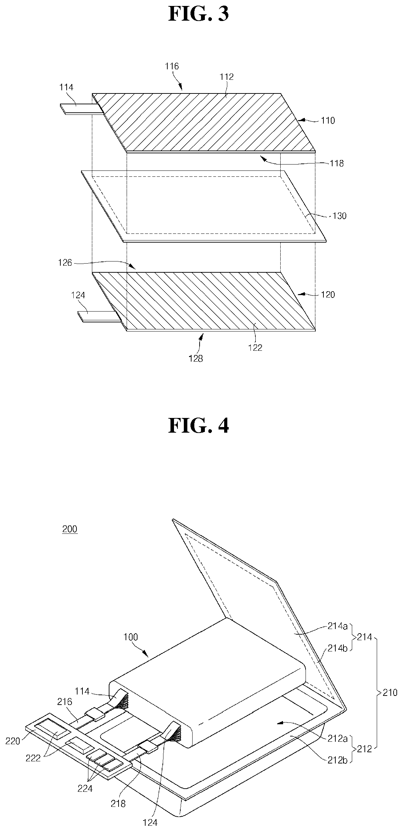

FIG. 1 illustrates an electrode assembly according to an exemplary embodiment of the present invention. FIG. 2 illustrates a disassembled state of the electrode assembly of FIG. 1. FIG. 3 illustrates a disassembled state of a portion of the electrode assembly of FIG. 1.

Referring to FIGS. 1 through 3, an electrode assembly 100 according to an exemplary embodiment of the present invention includes a positive electrode 110, a negative electrode 120, and a separator 130.

In the positive electrode 110, the positive electrode coating 112 is coated on at least one of opposite first and second surfaces 116 and 118 of a positive electrode collector. In one embodiment, the positive electrode collector is formed of aluminum or an aluminum alloy. Alternatively, the positive electrode collector may be formed of any other suitable material.

In one embodiment, the positive electrode coating 112 includes lithium titanium oxide (LTO). Alternatively, the positive electrode coating 112 may be formed of any other suitable material or combination of materials.

In the negative electrode 120, a negative electrode coating 122 is coated on at least one of opposite first and second surfaces 126 and 128 of a negative electrode collector. In one embodiment, the negative electrode collector is formed of copper or a copper alloy. Alternatively, the negative electrode collector may be formed of any other suitable material.

In one embodiment, the negative electrode coating 122 includes one or more negative electrode active materials in which lithium ion may be intercalated and deintercalated. The negative electrode active materials may include crystal or amorphous carbon or the carbon composites of carbon-based negative electrode active materials. However, the negative electrode active materials are not limited to the above-described materials but, alternatively, may include any other suitable material.

The separator 130 is interposed between the positive electrode 110 and the negative electrode 120 to insulate the positive electrode 110 and the negative electrode 120 from one another.

The separator 130, according to one embodiment, is formed of a non-woven fabric.

The separator 130, in one embodiment, includes polyethylene, polypropylene, polyvinylidene fluoride, polyethylene oxide, polyacrylonitrile, and/or polyvinylidene fluoride hexafluoropropylene. Alternatively, the separator 130 may be formed of any other suitable material or combination of materials.

In one embodiment, as illustrated in FIG. 2, the separator 130 is interposed between the positive electrode 110 and the negative electrode 120, and further covers and insulates the outermost portion of the electrode assembly 100, specifically, the positive electrode 110 or the negative electrode 120 that is disposed at the outermost portion of the electrode assembly 100. According to the above-described embodiment, the separator 130 is configured to insulate the positive electrode 110 and the negative electrode 120, and also insulate the electrode assembly 100 and other devices.

The electrode assembly 100, in one embodiment, is a stack type electrode assembly in which the positive electrode 110, the separator 130, and the negative electrode 120, as shown in FIG. 3, are repeatedly stacked. Although not shown in FIG. 3, in one embodiment, as illustrated in FIG. 2, the separator 130 is stacked at the upper portion of the positive electrode 110 or the lower portion of the negative electrode 120 and thereby insulates the negative electrode 120 or the positive electrode 110 that is stacked at the upper portion of the positive electrode 110 or the lower portion of the negative electrode 120.

Among the positive electrode coating 112 formed on one of the surfaces (e.g., the second surface 118) of the positive electrode collector of the positive electrode 110 and the negative electrode coating 122 formed on one of the surfaces (e.g., the first surface 126) of the negative electrode collector of the negative electrode 120 that is facing the one surface (e.g., the second surface 118) of the positive electrode 1 the area of the positive electrode coating 112 is greater than that of the negative electrode coating 122 within a tolerance range. In one embodiment, the tolerance range is about 0.3 % of the area of the positive electrode coating 112. In the positive electrode 110 according to one embodiment, the positive electrode coating 112 is coated on the first surface 116 or the second surface 118 of the positive electrode collector. In another embodiment, the positive electrode coating is coated on both the first surface 116 and the second surface 118. Similarly, in one embodiment, the negative electrode coating 122 is coated on the first surface 126 or the second surface 128 of the negative electrode collector of the negative electrode 120. However, in another embodiment, the negative electrode coating is coated on both the first surface 126 and the second surface 128.

In one embodiment, as shown in FIG. 3, the positive electrode 110, the separator 130 and the negative electrode 120 are stacked in the order of positive electrode 110/separator 130/negative electrode 120. Further, as shown in FIG. 2, in one embodiment, the order of stacking is separator 130/positive electrode 110/separator 130/negative electrode 120/separator 130.

In the positive electrode 110, in one embodiment, the positive electrode coating 112 is coated at all regions of the positive electrode collector other than a positive electrode tab 114. In the negative electrode 120, in one embodiment, the negative electrode coating 122 is coated at all regions of the negative electrode collector other than a negative electrode tab 124. The area of the positive electrode 110 is greater than that of the negative electrode 120 within a tolerance range. In one embodiment, the tolerance range is about 0.3 % of the area of the positive electrode 110.

In the positive assembly 100 according to one embodiment, the size of the positive electrode 110 is the same or substantially the same as that of the negative electrode 120, as shown in FIG. 3, and as a result, the positive electrode 110 and the negative electrode 120 can easily be aligned. The alignability of the positive electrode 110 and negative electrode 120 prevents or reduces structural instability and chemical instability from occurring due to the alignment error of the positive electrode 110 and the negative electrode 120.

According to another embodiment, the size of the positive electrode 110 may be different from that of the negative electrode 120. However, as described above, the positive electrode coating 112 is coated on the positive electrode collector of the positive electrode 110 and the negative electrode coating 122 is coated on the negative electrode collector of the negative electrode 120 and the area of the positive electrode coating 112 is greater than that of the negative electrode coating 122 within a tolerance range. That is, the positive electrode collector of the positive electrode 110 and the negative electrode collector of the negative electrode 120 may have sizes different from one another, but the area of the positive electrode coating 112 formed on any one surface of the positive electrode is greater than that of the negative electrode coating portion 122 within a tolerance range.

FIG. 4 illustrates a secondary battery including an electrode assembly according to another exemplary embodiment of the present invention.

Referring to FIG. 4, a secondary battery 200 including an electrode assembly according to an exemplary embodiment includes the electrode assembly 100 that has been described above with reference to FIGS. 1 through 3, an external case 210, and a circuit protection module 220.

The external case 210, according to one embodiment, includes a body 212 and a cover 214.
The body 212, in one embodiment, includes an accommodation part 212a being a space for receiving, or accommodating, the electrode assembly 100, and a sealing part 212b extending outward from an opening region of the accommodation part 212a.
The cover 214, in one embodiment, extends from an edge of the sealing part 212b of the body 212 and may be rotatably, or hinged, open and closed about the edge of the sealing part 212b to contain the electrode assembly 100 in the external case 210. The cover 214, in one embodiment, includes a cover region 214a corresponding to the accommodation part 212a of the body 212 and a sealing part 214b corresponding to the sealing part 212b of the body 212. The cover region 214a of the cover 214 covers the accommodation part 212a of the body 212, and the sealing part 214b of the cover 214 is sealed with the sealing part 212b of the body 212.

In the secondary battery 200 according to one embodiment, the electrode assembly 100 is received, or accommodated, in the accommodation part 212a, and the sealing part 212b of the body 212 and the sealing part 214b of the cover 214 are sealed, such as through a thermal bonding scheme.

The secondary battery 200, in one embodiment, includes a positive electrode lead 216 that is extended from the positive electrode tabs 114 of the electrode assembly 100, the positive electrode tabs 114 of the stacked positive electrodes 110 being connected together, and a negative electrode lead 218 that is extended from the negative electrode tabs 124 of the electrode assembly 100, the negative electrode tabs 124 of the stacked negative electrodes 120 being connected together.
The circuit protection module 220, in one embodiment, is electrically connected to the electrode assembly 100 through the positive electrode lead 216 and the negative electrode lead 218.
The circuit protection module 220, in one embodiment, includes control devices 222 configured to control the secondary battery 200.
The circuit protection module 220, in one embodiment, is configured to control the charge/discharge of the secondary battery 200.
The circuit protection module 220, in one embodiment, includes external terminals 224 configured to connect the secondary battery 200 to external equipment or devices.

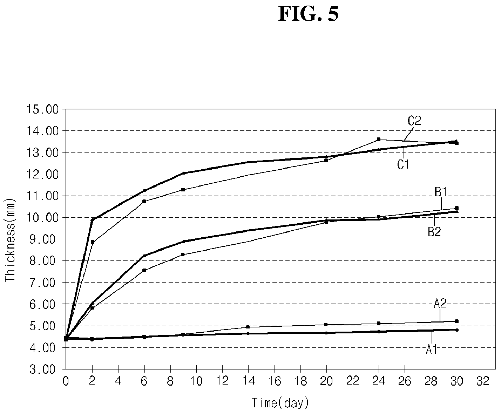

FIG. 5 illustrates a graph showing that swelling does not highly occur in the secondary battery including the electrode assembly according to the invention.

The graph of FIG. 5 shows results of swelling tests measuring thickness of secondary batteries over time. The results shown in FIG. 5 correspond to swelling tests performed on two secondary batteries 200 according to the present invention (which are indicated by A1 and A2 in the graph of FIG. 5) including the electrode assembly 100; swelling tests performed on two secondary batteries (which are indicated by B1 and B2 in the graph of FIG. 5) including an electrode assembly in which the area ratio of a positive electrode coating to a negative electrode coating is 1.05 (i.e. the area of the positive electrode coating is greater than the area of the negative electrode coating by an amount greater than the tolerance range described above with respect to the electrode assembly 100), thus not forming part of the present invention; and swelling tests performed on two secondary batteries (which are indicated by C1 and C2 in the graph of FIG. 5) in which the area ratio of a negative electrode coating to a positive electrode coating is 1.05 and the area of the negative electrode coating is greater than that of the positive electrode coating , thus not forming part of the present invention.

The swelling test, for which results are shown in FIG. 5, is a test that charges/discharges the secondary battery at a temperature of 55 °C to measure a thickness change of the secondary battery over time. FIG. 5 shows the thickness of the secondary batteries over time and, more specifically, shows the thickness changing from an initial thickness of about 4.5 mm from 0 to 30 days.

Referring to FIG. 5, in the secondary battery 200 including the electrode assembly 100 according to an embodiment of the present invention, it can be seen that swelling does not highly occur.

That is, as shown in the graph of FIG. 5, in the secondary batteries 200 including the electrode assembly 100 according to an embodiment of the present invention, it can be seen that the thickness does not change substantially even when the swelling test is performed over a long period of time, as shown through data of reference numerals A1 and A2.

On the other hand, in secondary batteries in which the area ratio of the positive electrode coating portion and the negative electrode coating portion that are facing each other is 1.05 and the area of the positive electrode coating portion is greater than the area of the negative electrode coating portion by an amount greater than the tolerance range described above with respect to the electrode assembly 100, it can be seen from FIG. 5 that the change of thickness is large, as shown through data of reference numerals B1 and B2. Moreover, in secondary batteries in which the area ratio of the negative electrode coating portion and the positive electrode coating portion that are facing each other is 1.05 and the area of the negative electrode coating portion is greater than that of the positive electrode coating portion, it can also be seen from FIG. 5 that the change of thickness is large, as shown through data of reference numerals C1 and C2.

Accordingly, in the secondary battery 200 including the electrode assembly 100 according to an embodiment of the present invention, the graph of FIG. 5 illustrates that an amount of swelling is small.

According to exemplary embodiments of the present invention, the area of the positive electrode coating portion is greater than that of the negative electrode coating portion within a tolerance range.

According to exemplary embodiments of the present invention, moreover, structural instability and chemical instability due to an alignment error are reduced or prevented because the positive electrode and the negative electrode are easily aligned.

Some exemplary embodiments have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present invention as set forth in the following claims.

## Claims

1. An electrode assembly (100) comprising:
a positive electrode (110) comprising a positive electrode collector having a first surface (116, 118) coated with a positive electrode coating (112);
a negative electrode (120) comprising a negative electrode collector having a first surface (126, 128) coated with a negative electrode coating (122); wherein the negative coating comprises lithium titanium oxide; and
a separator (130) between the positive electrode and the negative electrode for insulating the positive electrode and the negative electrode,
wherein:
the positive electrode and the negative electrode are stacked, and the coated first surfaces of the positive electrode and negative electrode face each other, and
the area of the positive electrode coating is arranged to be greater than the area of the negative electrode coating by less than 5% of the area of the positive electrode coating.

2. The electrode assembly as claimed in claim 1, wherein the area of the positive electrode coating is arranged to be greater than the area of the negative electrode coating by less than 0.3% of the area of the positive electrode coating.

3. The electrode assembly as claimed in claim 1 or 2, wherein the area of the positive electrode is arranged to be greater than the area of the negative electrode.

4. The electrode assembly as claimed in claim 3, wherein the area of the positive electrode is arranged to be greater than the area of the negative electrode by less than 0.3 % of the area of the positive electrode.

5. The electrode assembly as claimed in any one of the preceding claims, wherein the separator comprises a non-woven fabric.

6. The electrode assembly as claimed in claim 5, wherein the separator comprises a material selected from the group consisting of polyethylene, polypropylene, polyvinylidene fluoride, polyethylene oxide, polyacrylonitrile, and polyvinylidene fluoride hexafluoropropylene.

7. The electrode assembly as claimed in any one of the preceding claims, wherein the negative electrode coating comprises lithium titanium oxide (LTO).

8. The electrode assembly as claimed in any one of the preceding claims, wherein the positive electrode coating is coated on the entire area of the first surface of the positive electrode other than a positive electrode tab (114), and the negative electrode coating is coated on the entire area of the first surface of the negative electrode other than a negative electrode tab (124).

9. The electrode assembly as claimed in any one of the preceding claims, wherein the positive electrode coating is further coated on a second surface (116, 118) of the positive electrode that is opposite the first surface of the positive electrode, and the negative electrode coating is further coated on a second surface (126, 128) of the negative electrode that is opposite the first surface of the negative electrode.

10. The electrode assembly as claimed in any one of the preceding claims, wherein the electrode assembly is a stack type electrode assembly.

11. A secondary battery (200) comprising:
an electrode assembly (100) according to any one of the preceding claims;
a pouch (210) accommodating the electrode assembly; and
a circuit protection module (220) electrically connected to the electrode assembly.

12. A method of manufacturing an electrode assembly (100), the method comprising:
forming a positive electrode (110) by coating a first surface of a positive electrode collector with a positive electrode coating (112);
forming a negative electrode (120) by coating a first surface of a negative electrode collector with a negative electrode coating (122); wherein the negative coating comprises lithium titanium oxide; and
disposing a separator (130) between the positive and negative electrodes,
wherein the positive and negative electrodes are stacked so that the coated first surfaces of the positive and negative electrodes face each other; and
the area of the positive electrode coating is formed to be greater than the area of the negative electrode coating by less than 5% of the area of the positive electrode coating.

13. The method of claim 12, comprising forming the area of the positive electrode coating to be greater than the area of the negative electrode coating by less than 0.3% of the area of the positive electrode coating.

14. The method of claim 12 or 13, comprising forming the area of the positive electrode to be greater than the area of the negative electrode.

15. The method of claim 14, comprising forming the area of the positive electrode to be greater than the area of the negative electrode by less than 0.3 % of the area of the positive electrode.

## Patentansprüche

1. Elektrodenanordnung (100), umfassend:
eine positive Elektrode (110), umfassend einen Positivelektroden-Kollektor mit einer ersten Oberfläche (116, 118), beschichtet mit einer Positivelektroden-Beschichtung (112);
eine negative Elektrode (120), umfassend einen Negativelektroden-Kollektor mit einer ersten Oberfläche (126, 128), beschichtet mit einer Negativelektroden-Beschichtung (122); wobei die negative Beschichtung Lithiumtitanoxid umfasst; und
einen Separator (130) zwischen der positiven Elektrode und der negativen Elektrode zum Isolieren der positiven Elektrode und der negativen Elektrode,
wobei:
die positive Elektrode und die negative Elektrode gestapelt sind und die beschichteten ersten Oberflächen der positiven Elektrode und der negativen Elektrode einander gegenüberliegen, und
die Fläche der Positivelektroden-Beschichtung so angeordnet ist, dass sie um weniger als 5 % der Fläche der Positivelektroden-Beschichtung größer als die Fläche der Negativelektroden-Beschichtung ist.

2. Elektrodenanordnung nach Anspruch 1, wobei die Fläche der Positivelektroden-Beschichtung so angeordnet ist, dass sie um weniger als 0,3 % der Fläche der Positivelektroden-Beschichtung größer als die Fläche der Negativelektroden-Beschichtung ist.

3. Elektrodenanordnung nach Anspruch 1 oder 2, wobei die Fläche der positiven Elektrode so angeordnet ist, dass sie größer als die Fläche der negativen Elektrode ist.

4. Elektrodenanordnung nach Anspruch 3, wobei die Fläche der positiven Elektrode so angeordnet ist, dass sie um weniger als 0,3 % der Fläche der positiven Elektrode größer als die Fläche der negativen Elektrode ist.

5. Elektrodenanordnung nach einem der vorangehenden Ansprüche, wobei der Separator einen Vliesstoff umfasst.

6. Elektrodenanordnung nach Anspruch 5, wobei der Separator ein Material, ausgewählt aus der Gruppe bestehend aus Polyethylen, Polypropylen, Polyvinylidenfluorid, Polyethylenoxid, Polyacrylnitril und Polyvinylidenfluorid-Hexafluorpropylen, umfasst.

7. Elektrodenanordnung nach einem der vorangehenden Ansprüche, wobei die Negativelektroden-Beschichtung Lithiumtitanoxid (LTO) umfasst.

8. Elektrodenanordnung nach einem der vorangehenden Ansprüche, wobei die Positivelektroden-Beschichtung auf der gesamten Fläche der ersten Oberfläche der positiven Elektrode mit Ausnahme einer Positivelektroden-Lasche (114) aufgebracht ist, und die Negativelektroden-Beschichtung auf der gesamten Fläche der ersten Oberfläche der negativen Elektrode mit Ausnahme einer Negativelektroden-Lasche (124) aufgebracht ist.

9. Elektrodenanordnung nach einem der vorangehenden Ansprüche, wobei die Positivelektroden-Beschichtung weiterhin auf einer zweiten Oberfläche (116, 118) der positiven Elektrode, die der ersten Oberfläche der positiven Elektrode entgegengesetzt ist, aufgebracht ist, und die Negativelektroden-Beschichtung weiterhin auf einer zweiten Oberfläche (126, 128) der negativen Elektrode, die der ersten Oberfläche der negativen Elektrode entgegengesetzt ist, aufgebracht ist.

10. Elektrodenanordnung nach einem der vorangehenden Ansprüche, wobei die Elektrodenanordnung eine Elektrodenanordnung vom Stapeltyp ist.

11. Sekundärbatterie (200), umfassend:
eine Elektrodenanordnung (100) nach einem der vorangehenden Ansprüche;
eine Tasche (210), die die Elektrodenanordnung aufnimmt; und
ein Schutzschaltungsmodul (220), das mit der Elektrodenanordnung elektrisch verbunden ist.

12. Verfahren zur Herstellung einer Elektrodenanordnung (100), wobei das Verfahren umfasst:
Ausbilden einer positiven Elektrode (110) durch Beschichten einer ersten Oberfläche eines Positivelektroden-Kollektors mit einer Positivelektroden-Beschichtung (112);
Ausbilden einer negativen Elektrode (120) durch Beschichten einer ersten Oberfläche eines Negativelektroden-Kollektors mit einer Negativelektroden-Beschichtung (122); wobei die negative Beschichtung Lithiumtitanoxid umfasst; und
Anordnen eines Separators (130) zwischen der positiven und der negativen Elektrode,
wobei die positive und die negative Elektrode so gestapelt sind, dass die beschichteten ersten Oberflächen der positiven und der negativen Elektrode einander gegenüberliegen; und
die Fläche der Positivelektroden-Beschichtung so ausgebildet ist, dass sie um weniger als 5 % der Fläche der Positivelektroden-Beschichtung größer als die Fläche der Negativelektroden-Beschichtung ist.

13. Verfahren nach Anspruch 12, umfassend Ausbilden der Fläche der Positivelektroden-Beschichtung derart, dass sie um weniger als 0,3 % der Fläche der Positivelektroden-Beschichtung größer als die Fläche der Negativelektroden-Beschichtung ist.

14. Verfahren nach Anspruch 12 oder 13, umfassend Ausbilden der Fläche der positiven Elektrode derart, dass sie größer als die Fläche der negativen Elektrode ist.

15. Verfahren nach Anspruch 14, umfassend Ausbilden der Fläche der positiven Elektrode derart, dass sie um weniger als 0,3 % der Fläche der positiven Elektrode größer als die Fläche der negativen Elektrode ist.

## Revendications

1. Ensemble d'électrodes (100) comprenant :
une électrode positive (110) comprenant un collecteur d'électrode positive ayant une première surface (116, 118) revêtue d'un revêtement d'électrode positive (112) ;
une électrode négative (120) comprenant un collecteur d'électrode négative ayant une première surface (126, 128) revêtue d'un revêtement d'électrode négative (122) ; où le revêtement d'électrode négative comprend de l'oxyde de titane-lithium ; et
un séparateur (130) entre l'électrode positive et l'électrode négative pour isoler l'électrode positive et l'électrode négative,
dans lequel :
l'électrode positive et l'électrode négative sont empilées, et les premières surfaces revêtues de l'électrode positive et de l'électrode négative sont opposées l'une à l'autre, et
la superficie du revêtement d'électrode positive est agencée de manière à être plus grande que la superficie du revêtement d'électrode négative de moins de 5 % de la superficie du revêtement d'électrode positive.

2. Ensemble d'électrodes tel que revendiqué dans la revendication 1, dans lequel la superficie du revêtement d'électrode positive est agencée de manière à être plus grande que la superficie du revêtement d'électrode négative de moins de 0,3 % de la superficie du revêtement d'électrode positive.

3. Ensemble d'électrodes tel que revendiqué dans la revendication 1 ou 2, dans lequel la superficie de l'électrode positive est agencée de manière à être plus grande que la superficie de l'électrode négative.

4. Ensemble d'électrodes tel que revendiqué dans la revendication 3, dans lequel la superficie de l'électrode positive est agencée de manière à être plus grande que la superficie de l'électrode négative de moins de 0,3 % de la superficie de l'électrode positive.

5. Ensemble d'électrodes tel que revendiqué dans l'une quelconque des revendications précédentes, dans lequel le séparateur comprend un tissu non tissé.

6. Ensemble d'électrodes tel que revendiqué dans la revendication 5, dans lequel le séparateur comprend un matériau choisi dans le groupe consistant en polyéthylène, polypropylène, fluorure de polyvinylidène, oxyde de polyéthylène, polyacrylonitrile et en fluorure de polyvinylidène-hexafluoropropylène.

7. Ensemble d'électrodes tel que revendiqué dans l'une quelconque des revendications précédentes, dans lequel le revêtement d'électrode négative comprend de l'oxyde de titane-lithium (LTO).

8. Ensemble d'électrodes tel que revendiqué dans l'une quelconque des revendications précédentes, dans lequel le revêtement d'électrode positive est appliqué sur toute la superficie de la première surface de l'électrode positive à l'exception d'une languette d'électrode positive (114), et le revêtement d'électrode négative est appliqué sur toute la superficie de la première surface de l'électrode négative à l'exception d'une languette d'électrode négative (124) .

9. Ensemble d'électrodes tel que revendiqué dans l'une quelconque des revendications précédentes, dans lequel le revêtement d'électrode positive est en outre appliqué sur une deuxième surface (116, 118) de l'électrode positive qui est opposée à la première surface de l'électrode positive, et le revêtement d'électrode négative est en outre appliqué sur une deuxième surface (126, 128) de l'électrode négative qui est opposée à la première surface de l'électrode négative.

10. Ensemble d'électrodes tel que revendiqué dans l'une quelconque des revendications précédentes, dans lequel l'ensemble d'électrodes est un ensemble d'électrodes de type pile.

11. Batterie secondaire (200) comprenant .
un ensemble d'électrodes (100) selon l'une quelconque des revendications précédentes ;
une poche (210) recevant l'ensemble d'électrodes ; et un module de protection de circuit (220) relié électriquement à l'ensemble d'électrodes.

12. Procédé de fabrication d'un ensemble d'électrodes (100), le procédé comprenant le fait :
de former une électrode positive (110) en revêtant une première surface d'un collecteur d'électrode positive d'un revêtement d'électrode positive (112) ;
de former une électrode négative (120) en revêtant une première surface d'un collecteur d'électrode négative d'un revêtement d'électrode négative (122) ; où le revêtement d'électrode négative comprend de l'oxyde de titane-lithium ;
de disposer un séparateur (130) entre les électrodes positive et négative,
dans lequel les électrodes positive et négative sont empilées de sorte que les premières surfaces revêtues des électrodes positive et négative soient opposées l'une à l'autre ; et
la superficie du revêtement d'électrode positive est formée de manière à être plus grande que la superficie du revêtement d'électrode négative de moins de 5 % de la superficie du revêtement d'électrode positive.

13. Procédé de la revendication 12, comprenant le fait de former la superficie du revêtement d'électrode positive de manière à être plus grande que la superficie du revêtement d'électrode négative de moins de 0,3 % de la superficie du revêtement d'électrode positive.

14. Procédé de la revendication 12 ou 13, comprenant le fait de former la superficie de l'électrode positive supérieure de manière à être plus grande que la superficie de l'électrode négative.

15. Procédé de la revendication 14, comprenant le fait de former la superficie de l'électrode positive de manière à être plus grande que la superficie de l'électrode négative de moins de 0,3 % de la superficie de l'électrode positive.
